# EUROPEAN PATENT SPECIFICATION

(11) **EP 0 735 770 B1**
(45) Date of publication and mention of the grant of the patent: **16.08.2001**
(21) Application number: 96302218.1
(22) Date of filing: 29.03.1996
(51) Int. Cl.: H04N 7/26, G06F 11/20

(54) **Signal processing apparatus**
Signalverarbeitungsgerät
Appareil de traitement de signal

(30) Priority: 31.03.1995 JP 7481395
(43) Date of publication of application: 02.10.1996
(73) Proprietor: SONY CORPORATION, Tokyo 141 (JP)
(72) Inventor: Kitazato, Naohisa, Shinagawa-ku, Tokyo 141 (JP)
(74) Representative: Ayers, Martyn Lewis Stanley

(56) References cited:
- EP-A- 0 327 128
- EP-A- 0 360 489
- PATENT ABSTRACTS OF JAPAN vol. 018, no. 084 (E-1506), 10 February 1994 & JP 05 292068 A (NEC CORP;OTHERS: 01), 5 November 1993,

## Description

The present invention relates to a signal processing apparatus having a standby signal processing system which is operable in the event of a fault of a main signal processing system.

Broadcast signal transmitting apparatus are generally required to avoid interruptions of broadcasting services due to faults or the like. To meet such a requirement, conventional broadcast signal transmitting apparatus have a main signal processing circuit and a standby signal processing circuit. When the main signal processing circuit suffers a fault while it is transmitting a broadcast, the signal route is switched from the main signal processing circuit to the standby signal processing circuit either manually by the operator or automatically to continue transmitting the broadcast.

The above conventional arrangement, however, is disadvantageous in that since the signal route is switched from the main signal processing circuit to the standby signal processing circuit after a fault has been detected, the broadcast signal is partly lost, resulting in a temporary difficulty in video and audio transmission. In future broadcasting services which transmit charged programs to subscribers, such a temporary difficulty in video and audio transmission upon switching to a standby signal processing circuit could possibly cause a problem.

It is therefore an object of the present invention to provide a signal processing apparatus which is capable of transmitting a signal free of any partial loss or dropout when the signal route is switched from a main signal processing circuit to a standby signal processing circuit upon a fault of the main signal processing circuit.

EP-A-0 327 128 discloses a main signal processing circuit comprising a transmitting unit, a receiving and retransmitting unit, and a receiving unit. It also discloses an equivalent standby signal processing circuit connected in parallel to the signal processing circuit. A first delay circuit follows the main signal processing circuit and a second delay circuit precedes the standby signal processing circuit. In the event of a fault in the main signal processing circuit, the device switches to select the output signal from the standby signal processing circuit instead of from the main signal processing circuit. The provision of the delay circuits prevents stoppage of data flow or loss of data from the output signal in such an event.

According to the present invention as defined in appended claim 1, there is provided a signal processing apparatus characterized by a first router for being supplied with N signals including 1st to Nth signals, and outputting first N signals including 1st to Nth signals and second N signals including 1st to Nth signals, N signal processing circuits including 1st to Nth signal processing circuits for being supplied with the first N signals including 1st to Nth signals, N first delay circuits for delaying output signals from the N signal processing circuits and outputting delayed signals, N second delay circuits for being supplied with the second N signals including 1st to Nth signals, a selector for selecting either one of output signals from the N second delay circuits, a standby signal processing circuit for being supplied with an output signal from the selector and processing the output signal from said selector in the same manner as said signal processing circuits, a second router for being supplied with the delayed signals outputted from the N first delay circuits as 1st ~ Nth input signals, being supplied with an output signal from the (N + 1)th standby signal processing circuit as an (N + 1)th input signal, and selecting N signals from the supplied signals, and outputting the selected N signals, N fault detectors including 1st ^{~} Nth fault detectors for detecting whether the N signal processing circuits suffer a fault in signal processing thereof, and a control circuit for controlling the second router to select the 1st ^{~} Nth input signals as 1st ^{~} Nth output signals when any of the N signal processing circuits does not suffer a fault as detected by the N fault detectors, and for controlling the selector to select an Xth signal and controlling the second router to output the (N + 1)th input signal as an Xth output signal when an Xth (1 ≤ X ≤ N) signal processing circuit suffers a fault as detected by the N fault detectors.

With the above arrangement according to the present invention, when the Xth signal processing circuit suffers a fault in its signal processing operation, since the output signal from the Xth signal processing circuit is supplied through the corresponding first delay circuit to the second router, the second router can switch at a suitable point prior to a fault point. Because the standby signal processing circuit is supplied with its Xth input signal which is delayed by the delay time of the corresponding second delay circuit with respect to the input signal supplied to the Xth signal processing circuit, the standby signal processing circuit supplies a signal, which has not been properly processed by the Xth signal processing circuit, to the second router after the second router has switched. Consequently, the second router outputs an Xth signal free from any partial loss or dropout from an Xth output terminal thereof.

The invention will be further described by way of non-limitative example with reference to the accompanying drawings, in which:-
FIG. 1 is a schematic circuit block diagram of a digital broadcast transmitting apparatus as a signal processing apparatus to assist understanding of the present invention;
FIG. 2 is a circuit block diagram of an image compressing circuit in the digital broadcast transmitting apparatus;
FIG. 3 is a circuit block diagram of an image encoder in the image compressing circuit;
FIG. 4 is a circuit block diagram of a built-in image decoder in the image compressing circuit;
FIG. 5 is a flowchart of operation of a selector in the event of a fault;
FIG. 6 is a flowchart of operation of a CPU in the event of a fault;
FIG. 7 is a flowchart of operation of a standby DSP in the event of a fault;
FIG. 8 is a timing chart of operation of the digital broadcast transmitting apparatus in the event of a fault;
FIG. 9 is a timing chart showing changes in occupied areas of buffer memories;
FIG. 10 is a diagram showing an arrangement of data groups;
FIG. 11 is a diagram showing picture types and a predictive structure; and
FIG. 12 is a schematic circuit block diagram of a digital broadcast transmitting apparatus as a signal processing apparatus according to an embodiment of the present invention.

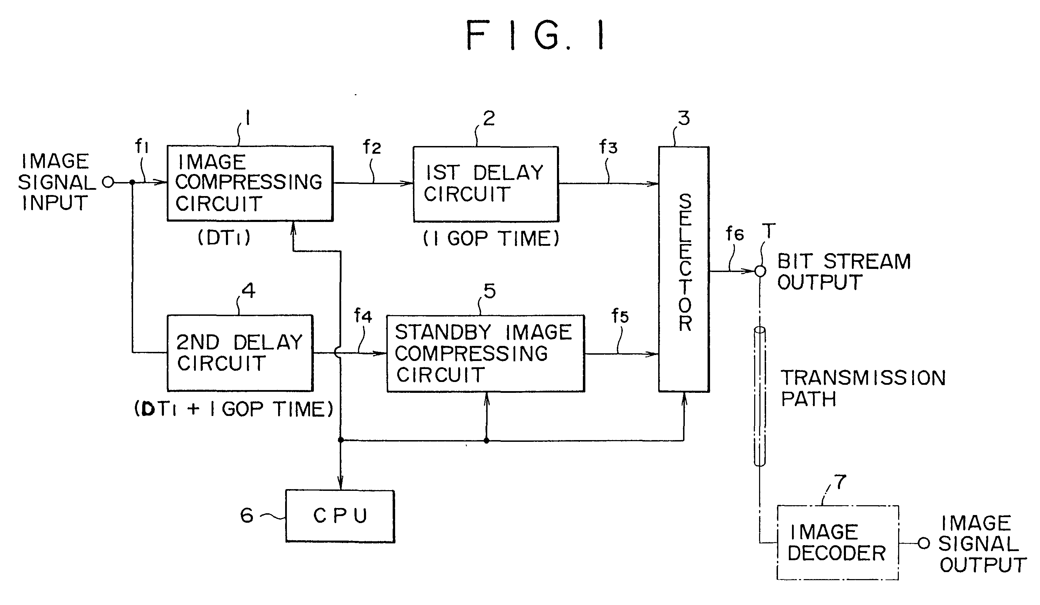

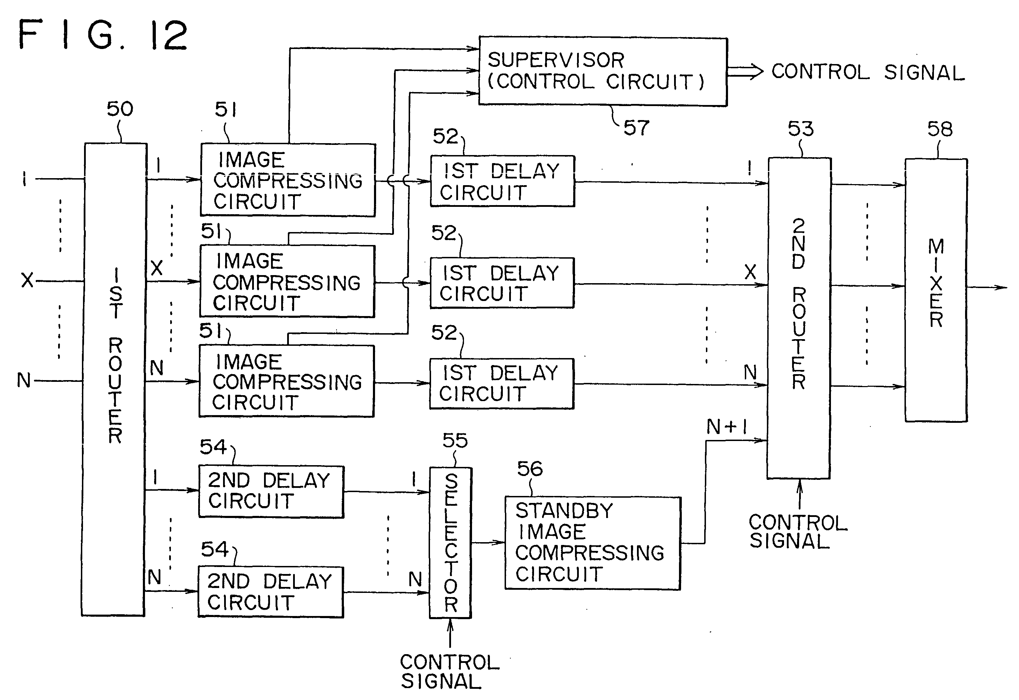

FIGS. 1 through 11 show an example of signal processing apparatus to assist understanding of the present invention. An embodiment of the present invention itself is shown in Fig. 12. According to Figs. 1 to 11, the example signal processing apparatus is a digital broadcast transmitting apparatus. First, an image compressing process employed by the digital broadcast transmitting apparatus will be described below. The image compressing process is based on correlation between frames for compressing a digital image signal, and compresses the amount of data of the digital image signal through a coding process which is a combination of DCT and motion compensation prediction, and a variable-length coding (VLC) process. The image compressing process will be described in detail below.

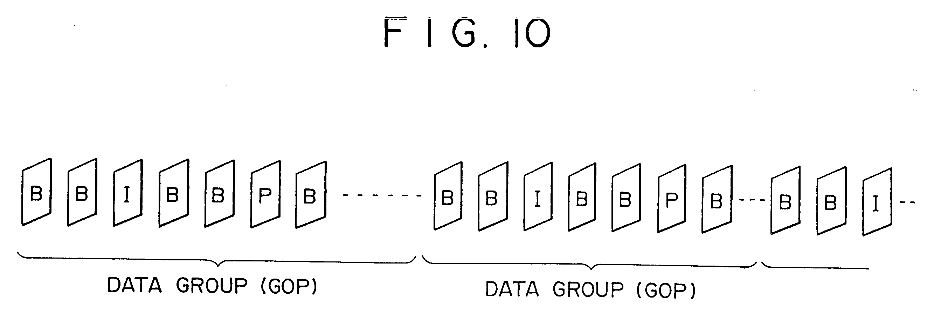

Picture type data are assigned to respective frames of an image signal, and the image signal is encoded mainly by an inter-frame predicting coding process based on the picture type data. As shown in FIG. 10 of the accompanying drawings, sequence data arranged in a certain sequence are repeatedly assigned as the picture type data to the frames. Each periodic sequence of sequence data comprises a single data group (GOP). Each of data groups (B, B, I, ... ) can be decoded independently of the other data groups.

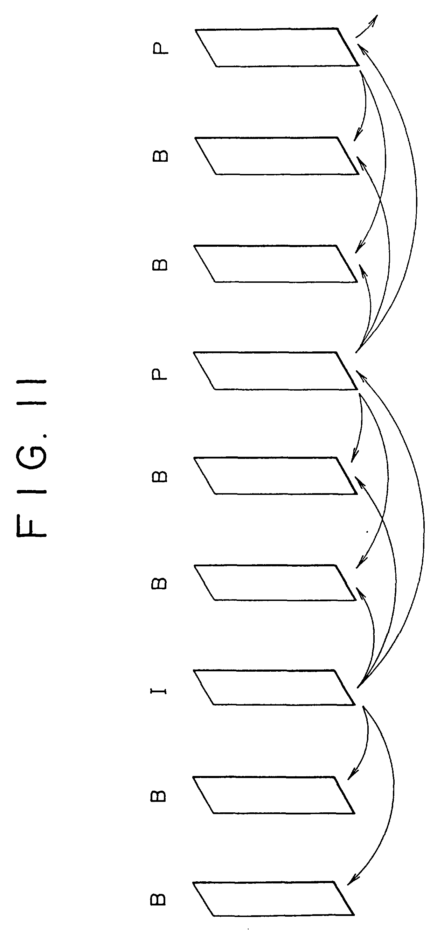

FIG. 11 of the accompanying drawings shows the correlation between the picture types of frames and their prediction. In FIG. 11, the picture types include three types of pictures, i.e., an I-picture (Intra-Picture), a P-picture (Predictive-Picture), and a B-picture (Bidirectionally-predictive Picture). The I-picture is not predicted from the other frames, but is subject to DCT using only image signal in the same frame. Such a process is referred to as an intra-frame coding process. The P-picture is a frame which can be predicted from an immidiately preceding I-picture or P-picture. Such a process is referred to as a forward predicting process. The B-picture can be predicted from immidiately preceding and immediately following I-pictures or P-pictures. Therefore, the B-picture can be predicted by a forward predicting process, predicted from a following picture by a process referred to as a backward predicting process, and predicted from both frames which precede and follow the picture by a process referred to as a bidirectional predicting process.

FIG. 1 is a schematic circuit block diagram of a digital broadcast transmitting apparatus which is a signal processing apparatus. In FIG. 1, an image compressing circuit 1, which is a signal processing circuit, compresses an input digital image signal according to a compression process which will be described later on. An output compressed image signal from the image compressing circuit 1 is supplied to a first delay circuit 2, which delays the compressed image signal by the periodic time of one data set (1 GOP time) and outputs the delayed compressed image signal to a selector 3.

The input digital image signal is also supplied to a second delay circuit 4, which delays the input digital image signal by a time which is equal to or longer than the delay time (1 GOP time) in the first delay circuit 2, and outputs the delayed digital image signal to a standby image compressing circuit 5. In this embodiment, the delay time in the second delay circuit 4 is set to the sum of a delay time (DT₁) in the image compressing circuit 1 and the delay time (1 GOP time) in the first delay circuit 2.

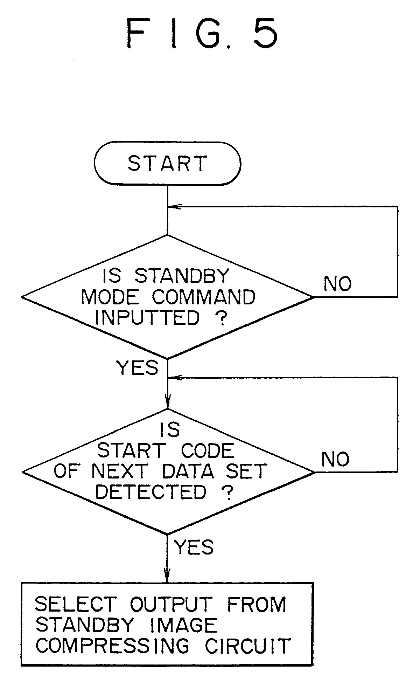

The standby image compressing circuit 5 which is a standby signal processing circuit processes the digital image signal in the same manner as the image compressing circuit 1, and outputs the compressed image signal to the selector 3. The selector 3 has a controller (not shown) for controlling the selection of an input signal, and the controller executes a flowchart shown in FIG. 5. The flowchart shown in FIG. 5 will be described later on. Alternatively, a CPU 6 may control switching in the selector 3.

Bit-stream data from the selector 3 are outputted from an output terminal T to an image decoder 7 through a transmission path (or a satellite transmission path in the satellite broadcast transmission).

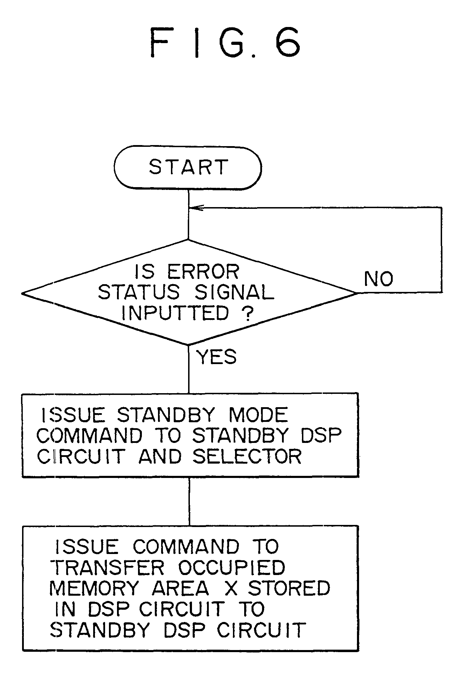

The CPU (central processing unit) 6 effects overall control of the above various circuits, and exchanges signals with the image compressing circuit 1, the standby image compressing circuit 5, and the selector 3 for executing a flowchart shown in FIG. 6. The flowchart shown in FIG. 6 will be described later on.

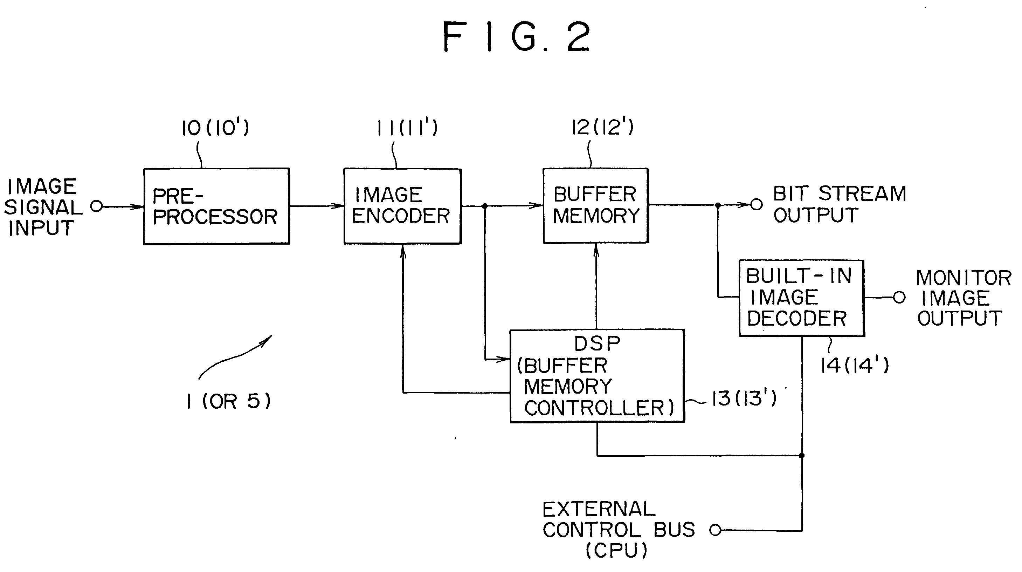

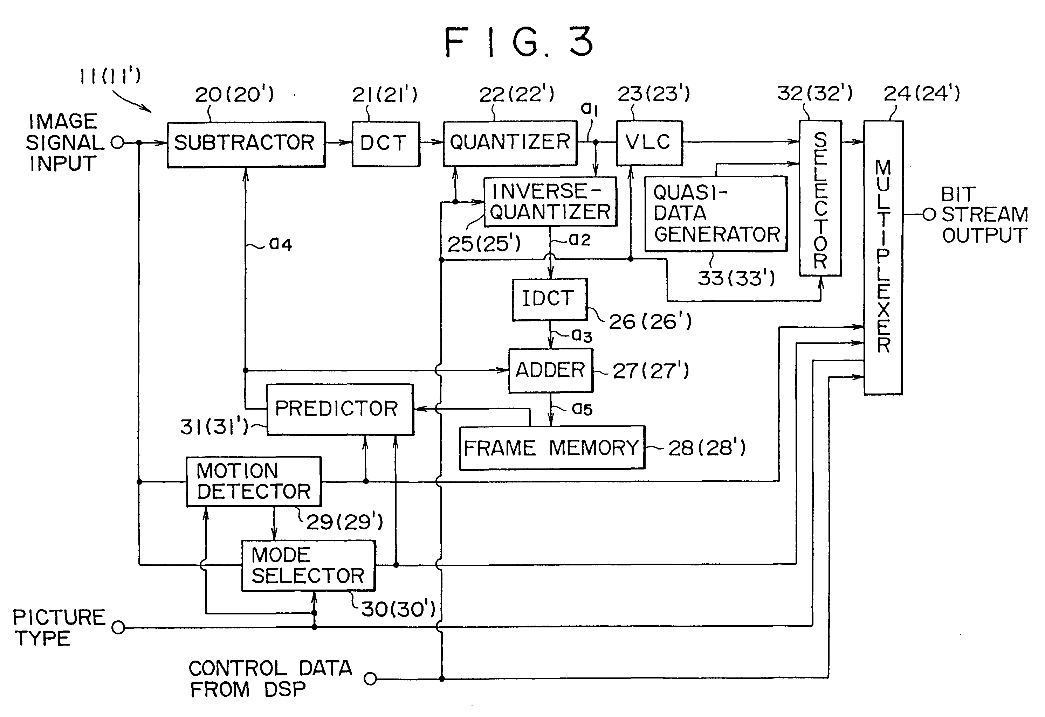

FIG. 2 is a circuit block diagram of the image compressing circuit 1 (or the standby image compressing circuit 5). In FIGS. 2 and 3, the reference numerals representing components of the standby image compressing circuit 5 are marked with a prime to distinguish themselves from the corresponding components of the image compressing circuit 1. In FIG. 2, a preprocessor 10 has a frame synchronizer, a resolution converter, a telecine signal detector, a color signal format converter, a scan converter, a frame sequence converter, and a sequence converter. The frame synchronizer synchronizes an image signal with a frame synchronizing signal. The resolution converter compresses the number of pixels of an image signal in a horizontal direction to a desired proportion. If an image signal is a telecine signal, the telecine signal detector returns it to an original state. The color signal format converter converts the format of a color signal (Y, R-Y, B-Y) from 4:2:2 to 4:2:0. The scan converter converts an image signal from a raster scan to a block scan for a DCT process (described later on). The frame sequence converter changes a frame sequence based on picture type data transmitted in synchronism with the frames of an input image signal. Specifically, if a frame is a B-picture, then the frame sequence converter delays the frame by three frames to make it possible to predict the B-picture from a future frame, and if a frame is an I-picture or a P-picture, then the frame sequence converter does not delay the frame, but outputs it directly. The sequence converter effects a sequence conversion process in conformity with an image encoder 11. An image signal that has variously been processed by the preprocessor 10 is supplied to the image encoder 11.

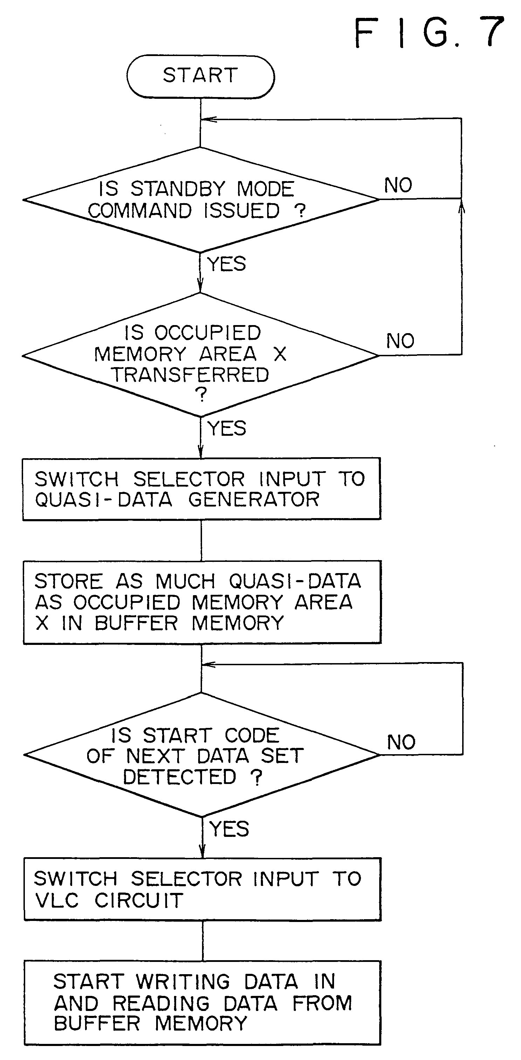

The image encoder 11 encodes an image signal in a manner described in detail later on, and outputs the encoded image signal (bit-stream data) to a buffer memory 12. The buffer memory 12 is controlled for its writing and reading operation by a DSP (digital signal processor) 13 which is arranged also as a buffer memory controller. The buffer memory 12 outputs a bit stream at a certain bit rate to a built-in image decoder 14. Details of the built-in image decoder 14 will be described later on. The DSP 13 and the built-in image decoder 14 exchange signal with the CPU 6. The DSP 13' in the standby image compressing circuit 5 executes a flowchart shown in FIG. 7. The flowchart shown in FIG. 7 will be described later on.

FIG. 3 is a detailed circuit block diagram of the image encoder 11. In FIG. 3, an input image signal is supplied to a subtractor 20, which subtracts a predictive value, described below, from the image signal. The subtractor 20 outputs two-dimensional real image data or predictive error data, which are supplied to a DCT encoder 21. The DCT encoder 21 converts each block (8 × 8 pixels, for example) of the supplied data into a DCT coefficient in the frequency region. Since pixels are generally a signal having a large low-frequency components, the distribution of DCT coefficients is generally biased.

An output signal from the DCT encoder 21 is supplied to a quantizer 22, which quantizes the supplied signal based on control data from the DSP 13. The quantized signal is supplied to a variable-length coder (VLC) 23, which encodes the quantized signal based on the control data from the DSP 13. The encoding process in the variable-length coder 23 is effected, using the biased distribution of DCT coefficients, such that a short code is assigned to events which appear with high probability and a long code is assigned to events which appear with low probability, with the result that the quantized signal will finally be encoded highly efficiently.

The image signal encoded by the variable-length coder 23 is outputted to a selector 32. The selector 32 is supplied with quasi-data (stuffing data) from a quasi-data generator 33, i.e., with zero data in this embodiment. The selector 32 selects one of the data from the variable-length coder 23 and the quasi-data from the quasi-data generator 33 in accordance with the control data from the DSP 13, and outputs the selected data to a multiplexer 24.

The quantized signal outputted from the quantizer 22 is supplied successively to an inverse-quantizer 25 and an IDCT circuit 26. An output signal from the IDCT circuit 26 is added to a predictive value (described later on) by an adder 27, which produces an encoded original image signal. The original image signal is stored in a frame memory 28.

The input image signal is also supplied to a motion detector 29 and a mode selector 30. The motion detector 29 detects a motion of the image signal in each block (8 × 8 pixels, for example) in relation to picture type data (I, P, B) from a picture type generator (not shown). The motion detector 29 then outputs a motion vector in each block to a predictor 31 and the multiplexer 24, and outputs an evaluative value for determining a motion vector to the mode selector 30. The mode selector 30 analyzes the image signal and the evaluative value, and selects a possible predicting mode in each block depending on the picture type data (I, P, B). Specifically, the mode selector 30 selects only the intra-frame coding process at all times for I-pictures, selects a predicting mode from the intra-frame coding process and the forward predicting process for P-pictures, and selects a predicting mode from the intra-frame coding process, the forward predicting process, the backward predicting process, and the bidirectional predicting process for B-pictures. The mode selector 30 outputs a selected predicting process to the predictor 31 and the multiplexer 24. The predictor 31 reads the image signal from the frame memory 28, and generates a predictive value based on the motion vector and the predicting mode. In the intra-frame coding process, the predictive value is zero. Therefore, the subtractor 20 outputs real image data in the intra-frame coding process, and outputs predictive error data in the other predicting modes.

The multiplexer 24 is supplied with the control data as well as the compressed image signal, the motion vector, and the predicting mode, multiplexes these signals, and outputs the multiplexed signals as a bit stream.

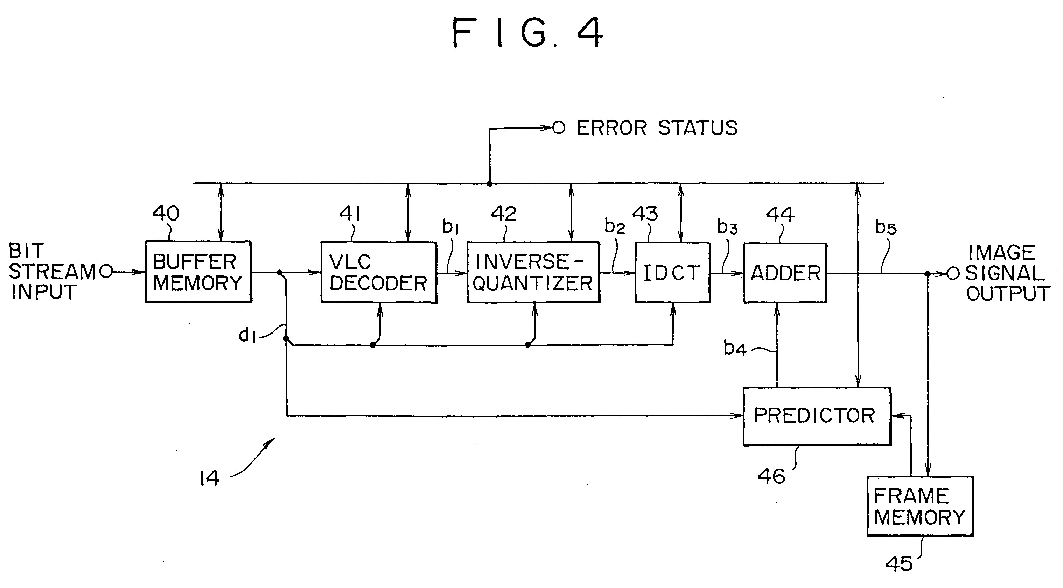

FIG. 4 is a detailed circuit block diagram of the built-in image decoder 14. In FIG. 4, a buffer memory 40 has the same storage capacity as the buffer memory 12, and writes a bit stream at the same rate as the reading rate of the buffer memory 12. Data are read from the buffer memory 40 by a request from a VLC decoder 41. The data start being read from the buffer memory 40 after first data to be decoded have been stored in the buffer memory 40 for a certain period of time. The buffer memory 40 does not cause a failure insofar as the buffer memory 12 operates normally.

The data read from the buffer memory 40 are supplied to the VLC decoder 41, which decodes the VLC-encoded bit stream of the compressed image signal. A decoded signal b₁ of quantized DCT coefficient series is the same as a code a₁ of the image encoder 11. The VLC decoder 41 reads the data from the buffer memory 40 in order to produce the signal b₁ successively in the same manner as with the signal a₁. An inverse-quantizer 42 generates a signal b₂ of inverse-quantized DCT coefficient series from the quantized DCT coefficient series. The signal b₂ of inverse-quantized DCT coefficient series is converted into a signal b₃ in the dimension of image data by an IDCT circuit 43. The signal b₂ is equivalent to a signal a₂ of the image encoder 11, and the signal b₃ is equivalent to a signal a₃ of the image encoder 11.

A predictor 46 generates an image predicting signal b₄ from a reproduced image signal stored in a frame memory 45. The signal b₄ is equivalent to a signal a₄ of the image encoder 11. An adder 44 adds the signal b₃ and the signal b₄, producing a reproduced image signal b₅. The signal b₅ is equivalent to a signal a₅ of the image encoder 11. The data read from the buffer memory 40 include additional data used in the image encoder 11, other than the motion vector and various mode indicating data, etc. Such data d₁ are used to act on the VLC decoder 41, the inverse-quantizer 42, etc. to output a correct reproduced image. The buffer memory 40, the VLC decoder 41, the inverse-quantizer 42, the IDCT circuit 43, and the predictor 46 have respective built-in fault detectors (not shown) for detecting whether a fault occurs in the signal reproducing process. When a fault is detected, these fault detectors output an error status signal to the CPU 6. For example, the fault detector in the VLC decoder 41 determines a fault when it is supplied with an encoded signal which is not according to the rules.

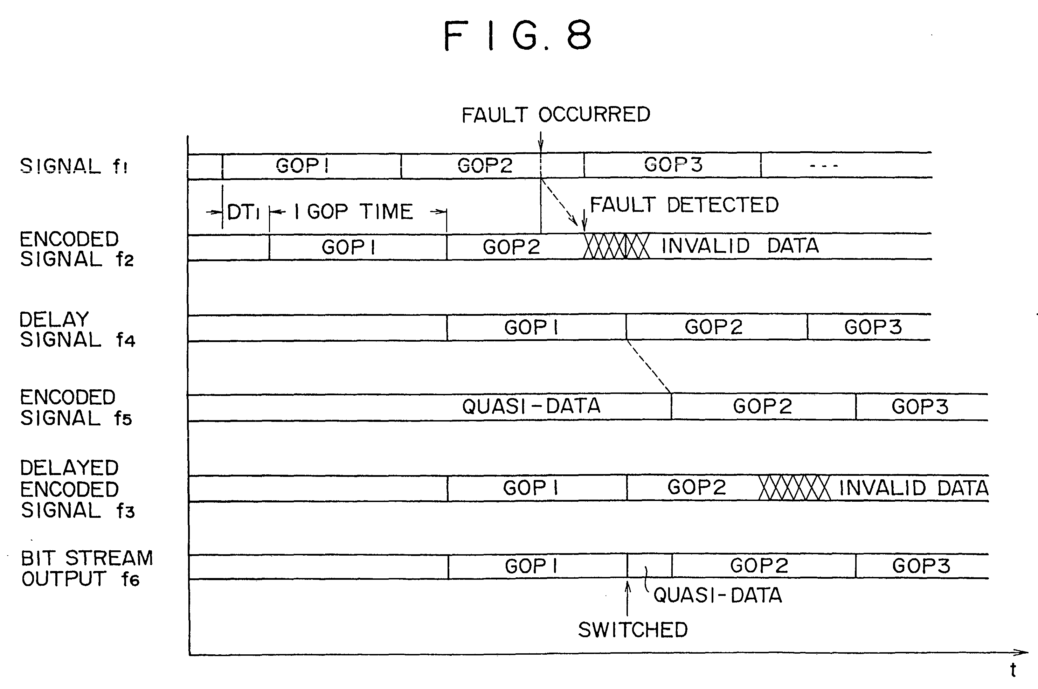

Operation of the signal processing apparatus of the above arrangement will be described below. In FIGS. 1 and 8, an input video signal f₁ is compressed by the image compressing circuit 1, which outputs the encoded signal f₂ as a time-series signal in data sets (GOP). The encoded signal f₂ is delayed by a 1 GOP time with the first delay circuit 2, and a delayed signal f₃ is outputted to the selector 3. The input image signal is delayed by DT₁ + a 1 GOP time with the second delay circuit 4, and a delayed signal f₄ is outputted to the standby image compressing circuit 5. The image encoder 11' of the standby image compressing circuit 5 encodes the image signal. The DSP 13 ' thereof does not writes the encoded signal in the buffer memory 12', and the standby image compressing circuit 5 does not output a signal f₅. Alternatively, the DSP 13' writes quasi--data in the buffer memory 12', and the quasi-data are read from the buffer memory 12' and outputted from the standby image compressing circuit 5 to the selector 3. As long as the signal processing is normal, the selector 3 selects the output signal from the image compressing circuit 1, and outputs the signal as a bit-stream output signal f₆.

If the signal processing in a data set 2 (GOP 2) suffers a fault, the built-in image decoder 14 of the image compressing circuit 1 outputs an error status signal. Then, as shown in FIG. 6, the CPU 6 outputs a standby mode command to the DSP 13' of the standby image compressing circuit 5 and the selector 3. The CPU 6 also outputs a command to transfer an occupied memory area X stored in the DSP 13 of the image compressing circuit 1 to the DSP 13' of the standby image compressing circuit 5.

The DSP 13 of the image compressing circuit 1 detects an occupied memory area X of the buffer memory 12 at the time of switching between data sets (GOP), and stores updated occupied memory area data. When the DSP is supplied with the transfer command, the DSP 13 outputs the updated occupied memory area data.

As shown in FIG. 7, the DSP 13' of the standby image compressing circuit 5 switches the selector 32' to the quasi-data generator 33', stores an amount of quasi-data corresponding to the occupied memory area X in the buffer memory 12', and outputs the quasi-data while holding the occupied memory area X. At the time of the above fault, the standby image compressing circuit 5 processes the signal of the data set 1 (GOP 1), and waits for a start code of a next data set (GOP 2) to be inputted. When the standby image compressing circuit 5 detects the start code of GOP 2, it switches the selector 32' to the variable-length coder 23'. Now, an encoded signal of the data set 2 (GOP 2) is supplied, from its beginning, to the buffer memory 12', which starts writing the encoded signal. Therefore, after all the quasi-data have been read from the buffer memory 12', a signal following the data set 2 (GOP 2) is read from the buffer memory 12'.

As shown in FIG. 5, when the selector 3 is supplied with the transfer command, the selector 3 waits for a start code of a next data set (GOP 2) to be inputted from the image compressing circuit 1. When the selector 3 detects the start code of GOP 2, the selector 3 switches to an output signal from the standby image compressing circuit 5. Since the standby image compressing circuit 5 outputs the signal of the data set 2 (GOP 2) after the quasi-data, the selector 3 outputs the signal of the data set 2 (GOP 2) and subsequent signals following the quasi-data after the data set 1 (GOP 1). Therefore, the selector 3 outputs signals free of any partial loss or dropout even in the event of the fault.

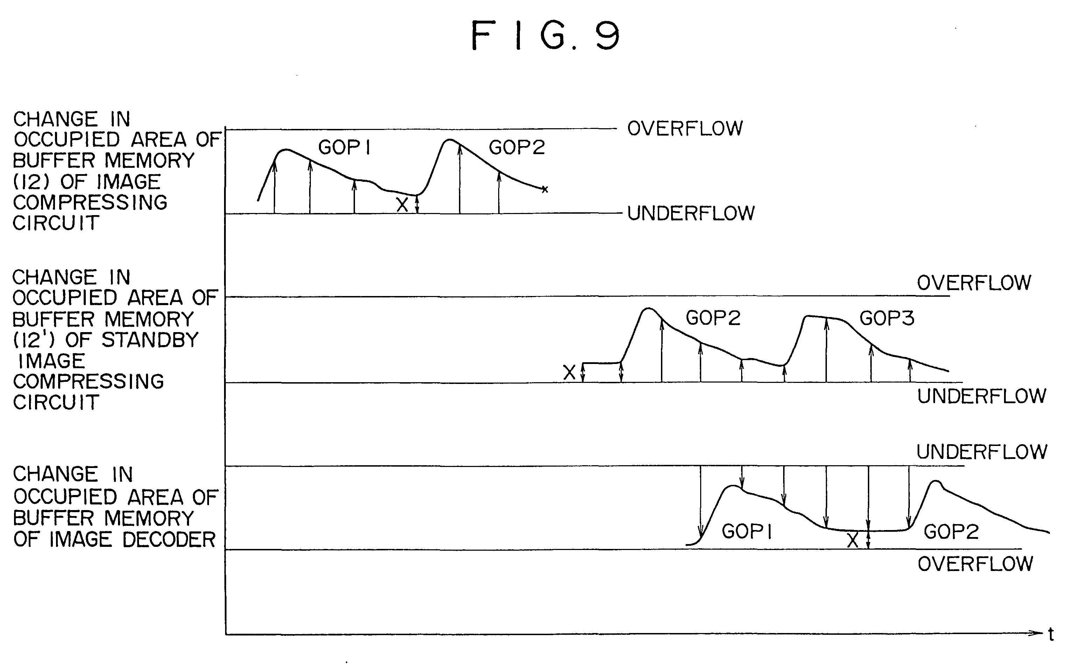

FIG. 9 show changes in the occupied areas of the buffer memories. In FIG. 9, the buffer memory 12 of the standby image compressing circuit 5 effects buffering operation with the same occupied memory area as the occupied memory area X of the buffer memory 12 of the image compressing circuit 1. Therefore, the buffer memory of the image decoder does not cause a failure.

FIG. 12 is a schematic circuit block diagram of a digital broadcast transmitting apparatus according to an embodiment of the present invention. In FIG. 12, a first router 50 is supplied with 1st ^{~} Nth image signals, and outputs the 1st ^{~} Nth image signals respectively to N image compressing circuits 51 and also respectively to N second delay circuits 54.

The image compressing circuits 51, which are signal processing circuits, compress the image signals and supply the compressed image signals through respective first delay circuits 52 to a second router 53. The image compressing circuits 51 have respective fault detectors (not shown), which output an error signal to a supervisor 57 if they detect a fault in the signal processing.

The second delay circuits 54 delay the image signals by a delay time which is the same or greater than the delay time of the first delay circuits 52, and output the delayed signals to a selector 55. The selector 55 selects one of the supplied signals according to a control signal from the supervisor 57, and outputs the selected signal to a standby image compressing circuit 56. The standby image compressing circuit 56 compresses the supplied signal in the same manner as the image compressing circuits 51, and outputs the compressed signal to the second router 53.

The second router 53 selects N signals from the (N + 1) signals according to a control signal from the supervisor 57, and outputs the selected N signals to a mixer 58, which multiplexes the N signals.

When no fault is detected in any of the image compressing circuits 51 by the fault detectors, the supervisor 57, which is a control circuit, outputs a control signal to enable the second router 53 to select the 1th ∼ Nth input signals in the numerical order. When a fault is detected in an Xth (1 ≦ X ≦ N) image compressing circuit 51 by the associated fault detector, then the supervisor 57 outputs a control signal to enable the selector 55 to select an Xth signal and also outputs a control signal to enable the second router 53 to select the (N + 1)th input signal as an Xth output signal.

If the Xth signal suffers a fault in its image processing, then the Xth signal is supplied through the selector 55 to the standby image compressing circuit 56, and the signal compressed by the standby image compressing circuit 56 is outputted as an Xth output signal from the second router 53. Therefore, the second router 53 outputs a normal signal regardless of which one of the signals 1st ~ Nth signals suffers a fault in its image processing. A plurality of standby image compressing circuits 56 may be employed to provide a plurality of backup signals.

## Claims

1. A signal processing apparatus comprising:
a first router (50) for being supplied with N signals including 1st to Nth signals, and outputting first N signals including said 1st to Nth signals and second N signals including said 1st to Nth signals, N being an integer number greater than one;
N signal processing circuits (51) including 1st to Nth signal processing circuits for being supplied with said first N signals including 1st to Nth signals;
N first delay circuits (52) for delaying output signals from said N signal processing circuits and outputting delayed signals;
N second delay circuits (54) for being supplied with said second N signals including 1st to Nth signals;
a selector (55) for selecting any one of the signals output from said N second delay circuits (54);
a standby signal processing circuit (56) for being supplied with an output signal from said selector (55) and processing the output signal from said selector in the same manner as said signal processing circuits;
a second router (53) for being supplied with the delayed signals outputted from said N first delay circuits (52) as 1st to Nth input signals, being supplied with an output signal from said standby signal processing circuit (56) as an (N + 1)th input signal, and selecting N signals from the supplied signals, and outputting the selected N signals;
N fault detectors including 1st to Nth fault detectors for detecting whether respective ones of said N signal processing circuits (51) suffer a fault in signal processing thereof; and
a control circuit (57) for controlling said second router (53) to select the 1st to Nth input signals as 1st to Nth output signals when none of said N signal processing circuits (51) suffers a fault as detected by said N fault detectors, and for controlling said selector (55) to select an Xth signal and controlling said second router (53) to output said (N + 1)th input signal as an Xth output signal when an Xth signal processing circuit (51) suffers a fault as detected by a respective one of said N fault detectors, wherein X meets the condition 1 ≤ X ≤ N.

2. A signal processing apparatus according to claim 1, wherein each of said second delay circuits (54) has a delay time which is the same as or greater than a delay time of each of said first delay circuits (52).

3. A signal processing apparatus according to claim 1 or 2, wherein each of said signal processing circuits (51) and said standby signal processing circuit (56) outputs signals as a time-series signal in data sets each comprising independent encoded data, and wherein the delay time of each said first delay circuit (51) is set to at least a periodic time of one data set.

4. A signal processing apparatus according to any one of the preceding claims, wherein each said signal processing circuit (51) comprises an image compressing circuit for compressing an input image signal, and said standby signal processing circuit (56) comprises a standby image compressing circuit for compressing an input image signal.

5. A signal processing apparatus according to claim 4, wherein each said image compressing circuit (51) has storage means (12) for temporarily storing encoded data, and said standby image compressing circuit (56) has standby storage means (12') for temporarily storing encoded data, the arrangement being such that each said image compressing circuit (51) detects an occupied area of said storage means (12) upon switching between data sets, and when a fault detector detects a fault in a respective image compressing circuit (51), an occupied area of said standby storage means (12') is set to the detected occupied area occupied by a data set preceding said fault in said respective image compressing circuit (51), and said standby storage means (12') starts writing a new data set next to the detected fault.

6. A signal processing apparatus according to any one of the preceding claims, further comprising one or more additional standby signal processing circuits (56) for supplying a plurality of backup signals, but such that the total number of standby signal processing circuits (56) is fewer than the number N of signal processing circuits (51).

## Patentansprüche

1. Signalverarbeitungsvorrichtung umfassend
eine erste Übertragungswegsteuereinrichtung (50), der N Signale, die erste bis N-te Signale enthalten, zugeführt werden und die erste N Signale, welche die ersten bis N-ten Signale enthalten, sowie zweite N Signale abgibt, welche die genannten ersten bis N-ten Signale enthalten, wobei N eine ganze Zahl ist, die größer ist als 1,
N Signalverarbeitungsschaltungen (51), enthaltend erste bis N-te Signalverarbeitungsschaltungen, denen die genannten ersten N Signale, enthaltend die ersten bis N-ten Signale zugeführt werden,
N erste Verzögerungsschaltungen (52) zur Verzögerung der Ausgangssignale von den genannten N Signalverarbeitungsschaltungen und zur Abgabe von verzögerten Signalen,
N zweite Verzögerungsschaltungen (54), denen die genannten zweiten N Signale zugeführt werden, welche erste bis N-te Signale enthalten,
eine Auswahleinrichtung (55) für die Auswahl irgendeines der Signale, die von den N zweiten Verzögerungsschaltungen (54) abgegeben werden,
eine Standby-Signalverarbeitungsschaltung (56), der ein Ausgangssignal von der genannten Auswahleinrichtung (55) zugeführt wird und die das Ausgangssignal von der betreffenden Auswahleinrichtung in derselben Weise verarbeitet wie die genannten Signalverarbeitungsschaltungen,
eine zweite Übertragungswegsteuereinrichtung (53), der die verzögerten Signale, welche von den genannten N ersten Verzögerungsschaltungen (52) abgegeben sind, als erste bis N-te Eingangssignale und ein Ausgangssignal von der genannten Standby-Signalverarbeitungsschaltung (56) als ein (N+1)-tes Eingangssignal zugeführt werden und die N Signale aus den zugeführten Signalen auswählt und die ausgewählten N Signale abgibt,
N Fehlerdetektoren, die erste bis N-te Fehlerdetektoren enthalten, zur Ermittlung, ob entsprechende Verarbeitungsschaltungen der genannten N Signalverarbeitungsschaltungen (51) in ihrer Signalverarbeitung einen Fehler zeigen,
und eine Steuerschaltung (57) zur Steuerung der genannten zweiten Übertragungswegsteuereinrichtung (53) für die Auswahl der ersten bis N-ten Eingangssignale als erste bis N-te Ausgangssignale, wenn keine der genannten N Signalverarbeitungsschaltungen (51) einen Fehler aufweist, wie dies durch die genannten N Fehlerdetektoren ermittelt wird, und zur Steuerung der genannten Auswahleinrichtung (55) für die Auswahl eines X-ten Signals und zur Steuerung der genannten zweiten Übertragungswegsteuereinrichtung (53) für die Abgabe des genannten (N+1)-ten Eingangssignals als X-tes Ausgangssignal, wenn eine X-te Signalverarbeitungsschaltung (51) einen Fehler aufweist, wie dies durch einen entsprechenden Fehlerdetektor der betreffenden N Fehlerdetektoren ermittelt ist, wobei X der Bedingung 1 ≤ X ≤ N genügt.

2. Signalverarbeitungsschaltung nach Anspruch 1, wobei jede der genannten zweiten Verzögerungsschaltungen (54) eine Verzögerungszeit aufweist, die dieselbe ist wie oder die größer ist als eine Verzögerungszeit jeder der ersten Verzögerungsschaltungen (52).

3. Signalverarbeitungsvorrichtung nach Anspruch 1 oder 2, wobei jede der genannten Signalverarbeitungsschaltungen (51) und die genannte Standby-Signalverarbeitungsschaltung (56) Signale als Zeitfolgesignal in Datensätzen abgeben, deren jeder unabhängig codierte Daten aufweist, und wobei die Verzögerungszeit jeder ersten Verzögerungsschaltung (51) auf zumindest eine periodische Zeit eines Datensatzes festgelegt ist.

4. Signalverarbeitungsvorrichtung nach irgendeinem der vorhergehenden Ansprüche, wobei jede Signalverarbeitungsschaltung (51) eine Bildkompressionsschaltung aufweist zur Komprimierung eines eingangsseitigen Bildsignals und wobei die genannte Standby-Signalverarbeitungsschaltung (56) eine Standby-Bildkompressionsschaltung zur Komprimierung eines eingangsseitigen Bildsignals aufweist.

5. Signalverarbeitungsvorrichtung nach Anspruch 4, wobei jede Bildkompressionsschaltung (51) eine Speichereinrichtung (12) aufweist zur temporären Speicherung von codierten Daten, wobei die genannte Standby-Bildkompressionsschaltung (56) eine Standby-Speichereinrichtung (12') aufweist zur temporären Speicherung von codierten Daten,
wobei die Anordnung so getroffen ist, dass jede Bildkompressionsschaltung (51) einen belegten Bereich der genannten Speichereinrichtung (12) auf das Umschalten zwischen Datensätzen ermittelt, und dass in dem Fall, dass ein Fehlerdetektor einen Fehler in einer entsprechenden Bildkompressionsschaltung (51) ermittelt, ein belegter Bereich der genannten Standby-Speichereinrichtung (12') auf den ermittelten belegten Bereich gelegt wird, der durch einen Datensatz belegt ist, welcher dem genannten Fehler in der betreffenden Bildkompressionsschaltung (51) vorangeht,
und wobei die genannte Standby-Speichereinrichtung (12') das Schreiben eines neuen Datensatzes im Anschluß an den ermittelten Fehler beginnt.

6. Signalverarbeitungsschaltung nach einem der vorhergehenden Ansprüche, umfassend ferner eine oder mehrere zusätzliche Standby-Signalverarbeitungsschaltungen (56) für die Abgabe einer Vielzahl von Sicherstellungssignalen, jedoch so, dass die Gesamtanzahl der Standby-Signalverarbeitungsschaltungen (56) geringer ist als die Anzahl N der Signalverarbeitungsschaltungen (51) .

## Revendications

1. Dispositif de traitement de signaux comprenant :
un premier circuit d'acheminement (50) destiné à être alimenté par N signaux comprenant des 1-er à N-ème signaux et délivrant lesdits 1-er à N-ème signaux et N seconds signaux incluant les 1-er à N-ème signaux, N étant un nombre entier supérieur à un,
N circuits de traitement de signaux (51) incluant des 1-er à N-ème circuits de traitement de signaux destinés à être alimentés par lesdits N premiers signaux incluant des 1-er à N-ème signaux;
N premiers circuits de retardement (52) pour retarder des signaux de sortie provenant desdits N circuits de traitement de signaux et délivrer des signaux retardés;
N seconds circuits de retardement (54) destinés à être alimentés par lesdits N seconds signaux incluant des 1-er à N-ème signaux;
un sélecteur (55) pour sélectionner l'un quelconque des signaux délivrés par lesdits N seconds circuits de retardement (54) ;
un circuit (56) de traitement de signaux d'attente destiné à être alimenté par un signal de sortie délivré par ledit sélecteur (55) et traiter le signal de sortie provenant dudit sélecteur de la même manière que ce qu'effectuent lesdits circuits de traitement de signaux;
un second circuit d'acheminement (52) destiné à être alimenté par les signaux retardés délivrés par lesdits N premiers circuits de retardement (52) en tant que 1-er à N-ème signaux d'entrée, à être alimenté par un signal de sortie délivré par ledit circuit (56) de traitement de signaux d'attente en tant que (N+1)-ème signal d'entrée, et sélectionner N signaux parmi les signaux envoyés, et délivrer les N signaux sélectionnés;
N détecteurs d'erreurs incluant des 1-er à N-ème détecteurs d'erreurs pour détecter si les circuits respectifs parmi lesdits N circuits de traitement de signaux (51) présentent une erreur lors du traitement des signaux; et
un circuit de commande (57) pour commander ledit second circuit d'acheminement (53) pour sélectionner les 1-er à N-ème signaux d'entrée en tant que 1-er à N-ème signaux de sortie lorsqu'aucun desdits circuits de traitement de signaux (51) présente une erreur telle que détectée par lesdits N détecteurs d'erreurs et pour commander ledit sélecteur (55) pour sélectionner un X-ême signal et commander ledit second circuit d'acheminement (53) pour délivrer ledit (N+1)-ème signal d'entrée en tant que X-ème signal de sortie lorsqu'un circuit (51) de traitement du X-ème signal présente une erreur telle que détectée par l'un desdits N détecteurs d'erreurs, X satisfaisant à la condition 1 ≤ X ≤ N.

2. Dispositif de traitement de signaux selon la revendication 1, dans lequel chacun desdits seconds circuits de retardement (54) produit un retard qui est égal ou supérieur à un retard de chacun desdits premiers circuits de retardement (52).

3. Dispositif de traitement de signaux selon la revendication 1 ou 2, dans lequel chacun desdits circuits de traitement de signaux (51) et desdits circuits de traitement de signaux d'attente (56) délivre des signaux sous la forme d'un signal en série dans le temps dans des ensembles de données comprenant chacun des données codées indépendantes, et dans lequel le temps de retard de chacun desdits premiers circuits de retardement (51) est réglé de manière à être inférieur à un intervalle de temps d'un ensemble de données.

4. Dispositif de traitement de signaux selon l'une quelconque des revendications précédentes, dans lequel chacun desdits circuits de traitement de signaux (51) comprend un circuit de compression d'images pour comprimer un signal d'image d'entrée, et ledit circuit de traitement de signaux d'attente (56) comprend un circuit de compression d'images d'attente servant à comprimer un signal d'image d'entrée.

5. Dispositif de traitement de signaux selon la revendication 4, dans lequel chacun desdits circuits de compression d'images (52) comporte des moyens de mémoire (12) servant à mémoriser temporairement des données codées, et un circuit (56) de compression d'images en attente comporte des moyens de mémoire en attente (12') pour mémoriser temporairement des données codées, l'agencement étant tel que chacun desdits circuits de compression d'images (51) détecte une zone occupée desdits moyens de mémoire (12) lors d'une commutation entre des ensembles de données, et lorsqu'un détecteur d'erreurs détecte une erreur dans un circuit respectif (51) de compression d'images, une zone occupée desdits moyens de mémoire en attente (12') est réglée sur la zone occupée détectée, qui est occupée par un ensemble de données précédant ladite erreur dans ledit circuit respectif (51) de compression d'images, et lesdits moyens de mémoire en attente (12') démarrent l'écriture d'une nouvelle donnée envoyée à la suite de l'erreur détectée.

6. Dispositif de traitement de signaux selon l'une quelconque des revendications précédentes, comprenant en outre un ou plusieurs circuits additionnels (56) de traitement de signaux en attente pour envoyer une pluralité de signaux de secours, et de telle sorte que le nombre total de circuits (56) de traitement de signaux en attente est inférieur au nombre N de circuits de traitement de signaux (51).
